# EUROPÄISCHE PATENTANMELDUNG

(11) **EP 1 935 725 A2**
(43) Veröffentlichungstag der Anmeldung: **25.06.2008**
(21) Anmeldenummer: 07021368.1
(22) Anmeldetag: 02.11.2007
(51) Int. Cl.: B60R 21/055, F16F 7/12

(54) **Verzögerungselemente für die Befestigung von Einrichtungsgegenständen in Personentransportsystemen und deren Anordnung**

(30) Priorität: 22.12.2006 DE 102006061257
(71) Anmelder: Buhmann, Robert Vermietung und Verpachtung, 88239 Wangen (DE)
(72) Erfinder: Wieschermann, Jochen, 88682 Salem (DE)
(74) Vertreter: Kiessling, Christian

(57) **Zusammenfassung**

Die Erfindung betrifft kompakte Verzögerungselemente zur Integration in die Befestigungsvorrichtungen von fest installierten Einrichtungsgegenständen in Personentransportsystemen sowie deren vorteilhafte Anordnung. Durch Integration solcher Verzögerungselemente lassen sich die auftretenden Beschleunigungen beim Aufprall einer Person auf einen solchen Einrichtungsgegenstand reduzieren und so ein besserer Schutz von Personen vor Verletzungen im Falle einer Kollision erreichen. Die Verzögerungselemente bestehen dabei aus einer Wabenstruktur, in die ein oder mehrere Verdrängungskörper und/oder Widerstandskörper eingelassen sind.

## Beschreibung

Die Erfindung betrifft Verzögerungselemente, die zur Befestigung von Einrichtungsgegenständen in Personentransportsystemen verwendet werden können, um die Verletzungsgefahr für Personen beim Aufprall auf diese Einrichtungsgegenstände im Fall einer Kollision zu reduzieren. Sie betrifft weiter eine vorteilhafte Anordnung und Kombination von solchen Verzögerungselementen.

Passagiere in Massentransportsystemen werden - im Gegensatz zu Fahrzeuginsassen im Individualverkehr - häufig nicht durch ein spezielles Rückhaltesystem vor den Folgen von Kollisionen geschützt. Im Fall einer primären Kollision des Transportmittels mit einem Hindernis wird das Transportmittel mit einer Bremsverzögerung abgebremst, während gleichzeitig die Passagiere im (beschleunigten) Bezugssystem des Transportmittels mit derselben Beschleunigung in Bewegungsrichtung des Transportmittels beschleunigt werden. Nach Stillstand des Transportmittels bewegen sie sich mit konstanter Geschwindigkeit weiter, bis sie mit Gegenständen im Wagen kollidieren. Die hauptsächliche Verletzungsgefahr für nicht durch ein Rückhaltesystem geschützte Passagiere bei einem Unfall besteht durch solche Sekundärkollisionen mit Einrichtungsgegenständen und gegebenenfalls zusätzlich durch Zusammenstoß mit umherfliegenden Einrichtungsgegenständen.

Eine Lösung für das Verletzungsproblem wäre der Einsatz von Rückhaltesystemen - wie z.B. Sicherheitsgurten - auch in allen Massentransportsystemen. Während Sicherheitsgurte in Flugzeugen vorgeschrieben sind und inzwischen auch in neue Überlandbusse eingebaut werden müssen, wird diese Lösung speziell im Schienenverkehr auch heute noch als nicht praktikabel angesehen. Gleichzeitig finden sich gerade im Schienenverkehr deutlich mehr Einrichtungsgegenstände wie z.B. fest installierte Tische oder Raumteiler als beispielsweise in Reisebussen. Um die Verletzungsgefahr zu minimieren, müssen solche Einrichtungsgegenstände bei fehlenden Rückhaltesystemen für die Passagiere einerseits sicher befestigt sein, um ein Losreißen und Umherfliegen im Kollisionsfall zu verhindern und andererseits hinreichend deformierbar sein, um beim Aufprall eines Passagiers genügend Energie absorbieren zu können und so die Beschleunigungskräfte auf den Passagier in tolerablem Rahmen zu halten.

Allgemein bekannt ist weiterhin der Einsatz von energieverzehrenden Elementen zur Dämpfung eines Aufpralls. Im einfachsten Fall lässt sich das dadurch realisieren, dass man die gefährdende Struktur selbst aus elastisch bis plastisch deformierbaren Material herstellt. Dies verbietet sich aber in den meisten Fällen wegen der Funktionsanforderungen an die gefährdende Struktur. In diesen Fällen werden dann vielfach die Verbindungselemente zwischen zwei Strukturteilen energieverzehrend ausgeführt. Als energieverzehrende Strukturen sind z.B. Federn, ineinanderschiebbare Rohre und auch Wabenstrukturen bekannt. Weiterhin werden auch aktive Systeme beschrieben, die im Fall eines bevorstehenden Aufpralls den Abstand zwischen zwei Strukturteilen künstlich vergrößern und den entstehenden Zwischenraum mit energieverzehrenden Strukturen füllen, um so für die Absorption der Aufprallenergie zusätzlichen Deformationsweg zu erhalten.

Speziell im Schienenverkehr wird das Augenmerk bisher hauptsächlich auf die Beherrschung einer möglichen Primärkollision eines Schienenfahrzeuges mit einem Hindernis gelegt. An dieser Stelle kommen verschiedene der oben genannten energieverzehrenden Strukturen zum Einsatz, um die Aufprallenergie möglichst gleichmäßig zu vernichten und so die Passagiere keinen zu hohen Beschleunigungen auszusetzen. So beschreibt die DE 196 16 944 B4 einen irreversiblen Deformationsdämpfer als Teil eines Aufpralldämpfers, der nach dem Prinzip der ineinanderschiebbaren Rohre arbeitet. Aus der DE 100 55 876 A1 ist ein aktives System bekannt, durch das im Fall eines bevorstehenden Aufpralls die Frontpartie eines Schienenfahrzeugs entgegen der Stoßrichtung ausgefahren und der so erzeugte Zwischenraum anschließend mit Energieabsorptionselementen gefüllt wird. Eine weitere Klasse von Arbeiten - als Beispiel sei die DE 43 32 289 A1 genannt - widmet sich der Vermeidung des Aufkletterns von Schienenfahrzeugen nach einem Aufprall, da dies die Zerstörung der Wagenstruktur zur Folge hätte.

Besonders bei Kollisionen von Hochgeschwindigkeitszügen reichen diese fahrzeugbezogenen Maßnahmen aber nicht mehr aus, um die Passagiere zuverlässig vor Verletzungen zu schützen. Hierfür müssen zusätzlich die Folgen von Sekundärkollisionen der Passagiere z.B. mit Einrichtungsgegenständen im Zug abgemildert werden. Diese Überlegungen haben bisher aber nur zu marginalen Veränderungen an den Einrichtungsgegenständen - abgerundete, breitere Kanten; wo möglich weichere Oberflächen - geführt. Energieverzehrenden Strukturen im engeren Sinne zur Abmilderung von Sekundärkollisionen werden oft nicht eingesetzt.

Fest installierte Tische stellen in einem solchen Kollisionsszenario ein besonderes Problem dar, da sie funktionsbedingt aus starrem Material bestehen müssen und zudem typischerweise eine relativ scharfe Kante aufweisen, die die Verletzungsgefahr für Passagiere beim Aufprall zusätzlich erhöht. Zur Erfüllung seiner Funktion muss ein solcher Tisch Vertikallasten von 1000 N und Horizontallasten von 1500 N ohne Verformung aushalten, was die Realisierung eines Personenaufprallschutzes weiter erschwert. Daher sind oft für fest installierte Tische in öffentlichen Verkehrssystemen noch keine wirksamen Personenaufprallschutzmechanismen vorhanden.

Nach dem beschriebenen Stand der Technik wäre es nun denkbar, die Verbindungselemente zwischen Tisch und Wagen energieverzehrend auszulegen, um so die Aufprallenergie einer Person auf den Tisch kontrolliert abbauen und dadurch das Verletzungsrisiko minimieren zu können. Die bekannten energieverzehrenden Strukturen sind dafür aber aus unterschiedlichen Gründen nicht immer optimal geeignet. So lassen sich mit ineinanderschiebbaren Rohren effektive Crashelemente realisieren, die den Aufprall zweier Fahrzeuge aufeinander dämpfen können. Diese Lösungen lassen sich aber nicht sinnvoll auf die relativ geringen Energien skalieren, die beim Aufprall einer Person auf einen Tisch auftreten. Federn als energieverzehrende Strukturen würden zwar eine sehr genaue Realisierung einer vorgegebenen Verzögerungskurve erlauben, benötigen jedoch ein zusätzliches Abreißelement, um die für einen Tisch geforderte Belastbarkeit von 1000 bzw. 1500 N sicherzustellen. Auch lässt sich eine auf Federn basierende Lösung nicht kompakt genug realisieren, um ohne Änderung der äußeren Form des Tisches einsetzbar zu sein. Auch mit herkömmlichen Wabenstrukturen alleine kann die geforderte Funktionalität nicht erreicht werden, da zur Realisierung der geforderten Belastbarkeit zusätzliche Stützen erforderlich wären, so dass sich auch in dieser Weise kein platzsparender Aufbau und insbesondere keine Integration in bestehende Tische erreichen lässt.

Der Erfindung liegt die Aufgabe zugrunde, einen wirksamen und praktisch sowie ökonomisch realisierbaren Personenaufprallschutz für in Massentransportsystemen installierte Tische zu realisieren, der in diese Tische bzw. in ihre Befestigungsvorrichtungen integrierbar ist.

Ein solcher Aufprallschutz muss gemäß den britischen Railway Group Standards (vgl. ATOC Vehicle Standard AV/ST9001 Vehicle Interior Crashworthiness, Railway Safety, London, 2002) die Einhaltung der folgenden physiologischen Grenzwerte bei einem Crash sicherstellen:
- Die maximale Brusteindrückung gegen die Wirbelsäule ("sternum deflection") darf 30 mm nicht überschreiten
- Die maximale Eindrückung im abdominalen Bereich sollte nach Möglichkeit unterhalb von 40 mm liegen
- Die maximale Kopfbeschleunigung darf den Wert 80 g höchstens für einen Zeitraum unterhalb von 3 ms überschreiten
- Der HIC ("head injury criterion") -Index, der ein allgemein anerkanntes Maß für die Bewertung von Kopfverletzungen darstellt, darf den Wert 500 nicht überschreiten.

Neben der Einhaltung dieser Grenzwerte muss sichergestellt sein, dass sich der Tisch bei einem Aufprall nicht aus seiner Verankerung lösen kann und dass mit dem Personenaufprallschutzmechanismus keine Funktionseinschränkung des Tisches verbunden ist. Um die Verletzung anderer als der aufprallenden Personen - z.B. der in Fahrtrichtung rückwärts sitzenden Passagiere in einer Vierersitzgruppe - durch den sich bewegenden Tisch zu vermeiden, ist es vorteilhaft, wenn sich der Tisch bei einem Aufprall nicht unkontrolliert, sondern auf einer genau definierbaren Bahn bewegt. Aus ökonomischen Gründen ist es zusätzlich wünschenswert, dass sich der Personenaufprallschutz auch für bereits installierte Tische einfach nachrüsten lässt und dass sich das Schutzprinzip auch auf andere starre Einrichtungsgegenstände übertragen lässt.

Die Aufgabe wird unter anderem dadurch gelöst, dass als Befestigungselemente spezielle Verzögerungselemente so zwischen der Tragstruktur (z.B. dem Wagenkasten) und dem betreffenden Einrichtungsgegenstand (z.B. dem fest installierten Tisch) angebracht werden, dass sich beim Aufprall einer Person auf den Einrichtungsgegenstand das Verzögerungselement kontrolliert deformiert und so einen Teil der Aufprallenergie absorbiert. Die Verzögerungselemente bestehen aus einer Wabenstruktur, in die ein oder mehrere Verdrängungskörper und/oder Widerstandskörper eingelassen sind. Je nach den mechanischen Anforderungen können die Verdrängungskörper in der Wabenstruktur durch eine definierte Menge an Klebstoff fixiert sein. Auch können die Verdrängungskörper je nach Anforderung komplett im Inneren der Wabenstruktur liegen oder bis an den Rand der Wabenstruktur reichen, während die Widerstandskörper grundsätzlich bis an den Rand der Wabenstruktur reichen und die Wabenstruktur so in mehrere Segmente unterteilen. Um einen leichteren Ein- und Ausbau zu ermöglichen, kann das gesamte Verzögerungselement zusätzlich von einer Hüllstruktur umhüllt sein. Die von der Wabenstruktur umschlossenen Verdrängungskörper und/oder Widerstandskörper werden mittels einer oder mehrerer Befestigungsvorrichtungen - z.B. Schrauben - an einer der beiden zu verbindenden Fahrzeugstrukturen (Einrichtungsgegenstand oder Tragstruktur) befestigt, während die Wabenstruktur selbst oder - falls vorhanden - ihre äußere Hüllstruktur durch geeignete Mittel - z.B. Formschluss, Verschraubung oder Verklebung - in die jeweils andere der beiden zu verbindenden Strukturen eingepasst oder an ihr befestigt wird.

Die Verdrängungskörper lassen sich - ggf. durch Verklebung in der Wabenstruktur - so dimensionieren, dass sie die vorgeschriebene Belastung in die Wabenstruktur einleiten, ohne sich oder die Wabenstruktur zu deformieren. Wird jedoch bei einem Aufprall einer Person auf den Einrichtungsgegenstand die festgelegte Losbrechkraft überschritten, kommt es - falls vorhanden, unter Abreißen der Klebeverbindung zwischen Verdrängungskörper und Wabenstruktur - zu einer Relativbewegung zwischen Verdrängungskörper und/oder der Befestigungsvorrichtung und der Wabenstruktur, durch die die Wabenstruktur deformiert wird und so einen Teil der Aufprallenergie aufnimmt. Wenn durch die geometrischen Gegebenheiten ein kurzer Verzögerungsweg vorgegeben ist, kann die Energieaufnahme durch das Einbringen von Widerstandskörpern in die Wabenstruktur erhöht werden, wobei die Widerstandskörper vorteilhaft dünne Metallplatten sind, die von der sie umgebenden Wabenstruktur fixiert und durch die beim Aufprall wirkenden Kräfte deformiert werden. Durch die Einbettung der Wabenstruktur und damit auch der in ihr enthaltenen Verdrängungskörper und/oder Widerstandskörper in eine der beiden zu verbindenden Strukturen ist gleichzeitig gewährleistet, dass sich die Befestigung trotz Zerstörung der Wabenstruktur beim Aufprall nur kontrolliert deformieren, aber nicht lösen kann.

Speziell bei Einrichtungsgegenständen mit mehreren Freiheitsgraden der Bewegung nach einem Aufprall ist es vorteilhaft, mehrere Verzögerungselemente zur Befestigung eines Einrichtungsgegenstandes so zu kombinieren, dass diese verschiedene, bevorzugt zueinander orthogonale Achsen des Einrichtunsgegenstandes fixieren. Auf diese Weise lässt sich durch geeignete Dimensionierung der verschiedenen Verzögerungselemente eine feste Bahn definieren, die der Einrichtungsgegenstand im Falle eines Aufpralls durchläuft und entlang derer die Aufprallenergie teilweise absorbiert wird. Dieser Effekt gilt unabhängig von der speziellen Ausprägung der beteiligten Verzögerungselemente.

Die Realisierung eines Personenaufprallschutzes durch die beschriebenen Verzögerungselemente und ihre Anordnung bietet mehrere Vorteile:
- Der Personenaufprallschutz ist kompakt und kann in die Einrichtungsgegenstände oder deren Befestigungen integriert werden; er lässt sich auch für bereits vorhandene Einrichtungsgegenstände einfach nachrüsten.
- Durch Variation von Aufbau und Größe der Wabenstruktur, Größe und Verteilung der Widerstands- und Verdrängungskörper sowie der Dimensionierung der Klebverbindung zwischen Verdrängungskörpern und Wabenstruktur lässt sich die Energieaufnahme und der Verzögerungsweg leicht anpassen. Es ist daher möglich, für vorgegebene Verzögerungskurven angepasste Verzögerungselemente zu konstruieren.
- Bei Fixierung von mindestens zwei verschiedenen Achsen eines Einrichtungsgegenstandes mit jeweils mindestens einem Verzögerungselement lässt sich durch geeignete Dimensionierung der Verzögerungselemente eine feste Bahn definieren, die der Einrichtungsgegenstand im Falle eines Aufpralls durchlaufen soll und so eine unkontrollierte Bewegung des Einrichtungsgegenstandes vermeiden.
- Nach einem Notfallereignis müssen im Idealfall lediglich die betroffenen Verzögerungselemente ausgetauscht werden.

In den folgenden Abbildungen wird eine vorteilhafte Ausgestaltgung der Erfindung am Beispiel der Realisierung eines Personenaufprallschutzes für einen fest installierten Tisch in einem Schienenfahrzeug näher erläutert. Der im Beispiel betrachtete Tisch ist mit einer Stirnseite an der Wagenwand und zusätzlich mittels eines Stützfußes am Wagenboden befestigt. Gemäß der Offenbarung werden in beide Befestigungsvorrichtungen Verzögerungselemente integriert. Der betrachtete Tisch ist damit entlang zweier zueinander orthogonaler Achsen durch Verzögerungselemente befestigt und wird sich daher im Aufprallfall entlang einer festen Bahn bewegen, die durch geeignete Dimensionierung der beiden Verzögerungselemente eingestellt werden kann.

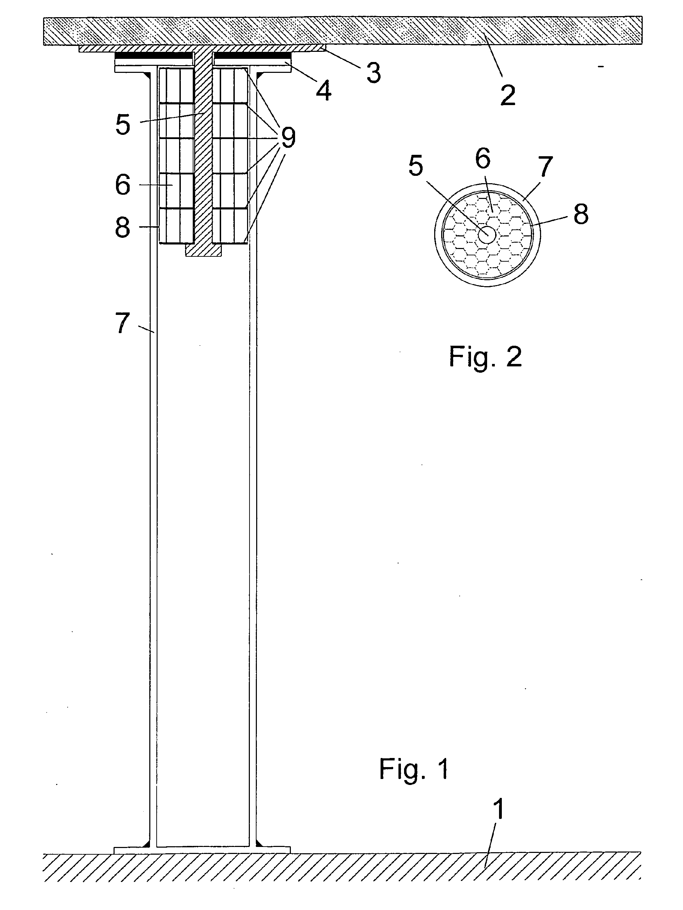

Fig. 1 zeigt einen Längsschnitt durch einen solchen Tisch 2 mit einem im Stützfuß 7 integrierten Verzögerungselement; Fig. 2 zeigt den Stützfuß 7 mit integriertem Verzögerungselement im Querschnitt. Das Verzögerungselement besteht aus einer Wabenstruktur 6, in die hier aufgrund des kurzen zur Verfügung stehenden Verzögerungsweges mehrere Widerstandskörper 9 eingelassen sind, die die Wabenstruktur 6 in mehrere Segmente unterteilen. Um einen leichteren Ein- und Ausbau zu ermöglichen, ist das gesamte Verzögerungselement zusätzlich von einer Hüllstruktur 8 umhüllt. Die von der Wabenstruktur 6 umschlossenen Widerstandskörper 9 werden mittels einer Befestigungsvorrichtung (hier: einer Schraube) 5 am Tisch 2 befestigt, während die äußere Hüllstruktur 8 des Verzögerungselementes durch Formschluss in den am Wagenboden 1 befestigten Tischfuß 7 eingepasst ist, wobei durch den Abschluss 4 des Tischfußes 7 verhindert wird, dass das Verzögerungselement nach oben aus dem Tischfuß 7 herausrutschen kann. Die Befestigung der Widerstandskörper 9 am Tisch 2 erfolgt hier aus praktischen Gründen mittelbar, indem die Schraube 5 an einer Befestigungsplatte 3 befestigt wird, die wiederum mit dem Tisch 2 verschraubt wird.

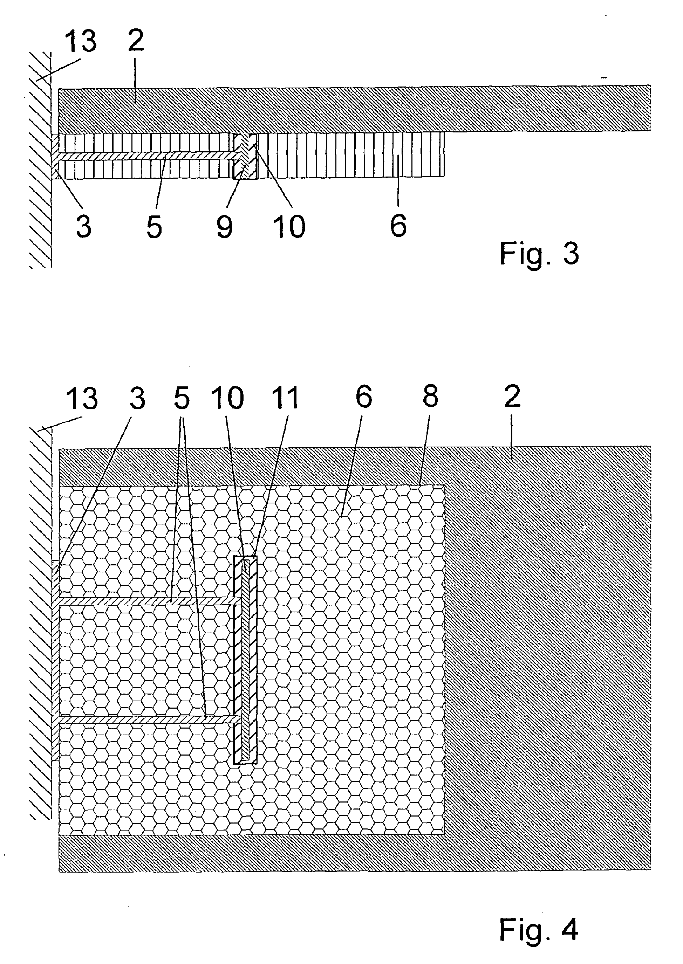

Fig. 3 zeigt einen Längsschnitt durch die Befestigung desselben Tisches 2 an der Wagenwand 13 mittels einer weiteren vorteilhaften Ausführung des erfindungsgemäßen Verzögerungselementes; Fig. 4 zeigt einen Querschnitt durch dieses Verzögerungselement. Das Verzögerungselement besteht wieder aus einer Wabenstruktur 6, in die hier aber wegen des größeren zur Verfügung stehenden Verzögerungsweges ein Verdrängungskörper 10 eingelassen und durch eine definierte Menge an Klebstoff 11 befestigt ist. Um einen leichteren Ein- und Ausbau und eine Befestigung an bereits vorhandenen Tischen zu ermöglichen, ist das gesamte Verzögerungselement von einer Hüllstruktur 8 umhüllt. Der von der Wabenstruktur 6 umschlossene Verdrängungskörper 10 ist mittels zweier Schrauben 5 - wieder mittelbar über eine Befestigungsplatte 3 - an der Wagenwand 13 befestigt, während die äußere Hüllstruktur 8 des Verzögerungselementes am Tisch 2 verschraubt ist.

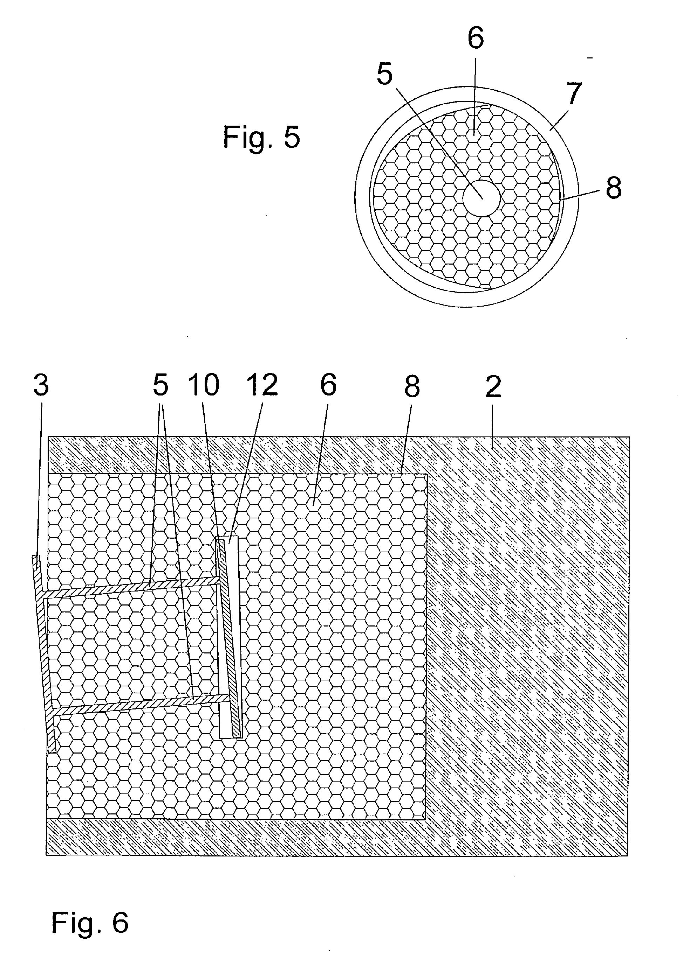

Durch den Aufprall eines Passagiers auf den Tisch verformen sich die Verzögerungselemente, nehmen dabei einen wesentlichen Teil der Aufprallenergie auf und führen den Tisch gleichzeitig auf einer definierten Bahn. Die entsprechend verformten Verzögerungselemente sind schematisch in Fig. 5 (Verzögerungselement im Tischfuß 7) und in Fig. 6 (Verzögerungselement zur Befestigung des Tisches 2 an der Wagenwand 13) dargestellt. In Fig. 6 erkennt man, dass sich der Tisch 2 durch den Aufprall relativ zur an der Wagenwand (in Fig. 6 nicht dargestellt) verschraubten Befestigungsplatte 3 gedreht hat. Durch das Überschreiten der festgelegten Losbrechkraft beim Aufprall ist die Klebverbindung 11 (vgl. Fig. 4) zwischen Verdrängungskörper 10 und Wabenstruktur 6 abgerissen und es setzt eine Relativbewegung zwischen dem Verdrängungskörper 10, den Befestigungsschrauben 5 sowie der Befestigungsplatte 3 einerseits und der Wabenstruktur 6 andererseits ein, durch die die Wabenstruktur 6 deformiert und im Bewegungsbereich 12 des Verdrängungskörpers 10 und der Befestigungsschrauben 5 partiell zerstört wird (der Bewegungsbereich der Befestigungsschrauben ist in der Figur der Übersichtlichkeit halber nicht dargestellt). Fig. 5 zeigt schematisch die Situation im Verzögerungselement im Tischfuß. Hier werden zunächst durch die Relativbewegung der Befestigungsschraube 5 gegenüber dem Tischfuß 7 die Widerstandskörper 9 deformiert, während die Wabenstruktur 6 zunächst teilweise deformiert sowie im Bewegungsbereich der Befestigungsschraube 5 partiell zerstört wird. Erst gegen Ende der Bewegung erfolgt bei dieser Ausprägung des Verzögerungselementes eine großräumigere Zerstörung der Wabenstruktur 6.

Der Einsatz der Verzögerungselemente wurde hier am Beispiel von fest installierten Tischen näher untersucht und beschrieben. Solche Verzögerungselemente lassen sich aber über diesen speziellen Einsatzzweck hinaus zur Befestigung allgemeiner Einrichtungsgegenstände wie z.B. Raumteiler, Stangen oder Ablagen im Gefährdungsbereich von Passagieren in Personentransportsystemen verwenden, wodurch auch für solche Einrichtungsgegenstände ein analoger Personenaufprallschutz realisiert werden kann. Besonders vorteilhaft ist der Einsatz der Verzögerungselemente wegen der dort fehlenden Rückhaltesysteme in Schienenfahrzeugen aller Art (Straßenbahnen, Züge - hier besonders Hochgeschwindigkeitszüge wie ICE und TGV - oder Magnetschwebebahnen) oder in Schiffen, aber auch in Caravananbauten oder Flugzeugen.

## Patentansprüche

1. Befestigungsvorrichtung für fest installierte Einrichtungsgegenstände in Personentransportmitteln, **dadurch gekennzeichnet, dass** an den Befestigungsstellen des Einrichtungsgegenstandes an der Tragstruktur spezielle Verzögerungselemente zwischen dem Einrichtungsgegenstand und der Tragstruktur angebracht werden, die sich beim Aufprall einer Person auf den Einrichtungsgegenstand kontrolliert deformieren und so einen Teil der Aufprallenergie absorbieren und dass diese Verzögerungselemente aus einer Wabenstruktur (6) bestehen, in die ein oder mehrere Verdrängungskörper (10) und/oder Widerstandskörper (9) eingelassen sind, wobei die Verdrängungskörper (10) je nach Anforderung komplett im Inneren der Wabenstruktur (6) liegen oder bis an deren Rand reichen können, während die Widerstandskörper (9) grundsätzlich bis an den Rand der Wabenstruktur (6) reichen und diese so in mehrere Segmente unterteilen.

2. Befestigungsvorrichtung für fest installierte Einrichtungsgegenstände in Personentransportmitteln nach Anspruch 1, **dadurch gekennzeichnet, dass** die Verzögerungselemente zusätzlich von einer Hüllstruktur (8) umhüllt sind.

3. Befestigungsvorrichtung für fest installierte Einrichtungsgegenstände in Personentransportmitteln nach einem der Ansprüche 1 bis 2, **dadurch gekennzeichnet, dass** die von der Wabenstruktur (6) umschlossenen Verdrängungskörper (10) und/oder Widerstandskörper (9) mittels einer oder mehrerer Befestigungsvorrichtungen (5) an einer der beiden zu verbindenden Fahrzeugstrukturen (Einrichtungsgegenstand oder Tragstruktur) befestigt werden, während die Wabenstruktur (6) selbst oder - falls vorhanden - ihre äußere Hüllstruktur (8) in die jeweils andere der beiden zu verbindenden Strukturen eingepasst oder an ihr befestigt wird.

4. Befestigungsvorrichtung für fest installierte Einrichtungsgegenstände in Personentransportmitteln nach Anspruch 1, **dadurch gekennzeichnet, dass** die Verdrängungskörper (10) in der Wabenstruktur (6) durch eine definierte Menge an Klebstoff (11) fixiert sind.

5. Befestigungsvorrichtung für fest installierte Einrichtungsgegenstände in Personentransportmitteln nach einem der Ansprüche 1 bis 4, **dadurch gekennzeichnet, dass** die Verdrängungskörper (10) und ihre Verklebung (11) in der Wabenstruktur (6) so dimensioniert sind, dass sie erst nach Überschreiten einer definierten Losbrechkraft eine Relativbewegung zur Wabenstruktur (6) durchführen können.

6. Befestigungsvorrichtung für fest installierte Einrichtungsgegenstände in Personentransportmitteln nach Anspruch 1, **dadurch gekennzeichnet, dass** die Verdrängungskörper (10) und die Widerstandskörper (9) aus Metall bestehen.

7. Verfahren zum Schutz von Personen beim Aufprall auf fest installierte Einrichtungsgegenstände in Personentransportmitteln, **dadurch gekennzeichnet, dass** die Einrichtungsgegenstände über mindestens ein Verzögerungselement nach einem der Ansprüche 1 bis 6 an der Tragstruktur befestigt sind.

8. Verfahren zum Schutz von Personen beim Aufprall auf fest installierte Einrichtungsgegenstände in Personentransportmitteln nach Anspruch 7, **dadurch gekennzeichnet, dass** die Einrichtungsgegenstände dergestalt über mindestens je zwei Verzögerungselemente an der Tragstruktur befestigt sind, dass die verschiedenen Verzögerungselemente entlang paarweise verschiedenen, bevorzugt zueinander orthogonalen Achsen des Einrichtungsgegenstandes angebracht sind.
